# EUROPÄISCHE PATENTSCHRIFT

(11) **EP 3 797 983 B1**
(45) Veröffentlichungstag und Bekanntmachung des Hinweises auf die Patenterteilung: **01.06.2022**
(21) Anmeldenummer: 20192888.4
(22) Anmeldetag: 26.08.2020
(51) Int. Cl.: B29D 30/72, B29C 33/12, B29C 37/00, B60C 13/00

(54) **HILFSVORRICHTUNG ZUM POSITIONIEREN EINES IN-CURE-LABELS AN EINER FORMFLÄCHE EINER VULKANISATIONSFORM**
AUXILIARY DEVICE FOR POSITIONING AN IN-CURE-LABEL ON A MOULD SURFACE OF A VULCANISATION MOULD
DISPOSITIF AUXILIAIRE PERMETTANT DE POSITIONNER UNE ÉTIQUETTE POLYMÉRISÉE EN PLACE SUR UNE SURFACE MOULÉE D'UN MOULE DE VULCANISATION

(30) Priorität: 30.09.2019 DE 102019214967
(43) Veröffentlichungstag der Anmeldung: 31.03.2021
(73) Patentinhaber: Continental Reifen Deutschland GmbH, 30165 Hannover (DE)
(72) Erfinder: Janerka, Martin, 30419 Hannover (DE); Zimmermann, Fabian, 30419 Hannover (DE); Bogenschütz, Peter, 30419 Hannover (DE)
(74) Vertreter: Continental Corporation

(56) Entgegenhaltungen:
- EP-A1- 2 980 177
- DE-A1-102018 221 100
- US-A- 4 017 352
- US-A- 5 932 052

## Beschreibung

Die Erfindung betrifft eine Hilfsvorrichtung zum Positionieren eines In-Cure-Labels an einer Formfläche einer Vulkanisationsform für einen Fahrzeugluftreifen. Die Dokumente US 4 017 352 und DE 10 2018 221100 zeigt grundsätzlich eine Hilfsvorrichtung zum Positionieren eines In-Cure-Label an einer Formfläche eines zu vulkanisierenden Rohlings eines Fahrzeugluftreifens.

Es ist bekannt auf den Seitenwänden von Fahrzeugluftreifen farbige, also nicht schwarze, Zeichen bzw. Beschriftungen anzubringen über farbig gestaltete Labels aufzubringen. Die Labels sind meist als Umfangsabschnitte von Kreisringen gestaltet und Plättchen aus einer oder mehreren dünnen, unvulkanisierten oder vorvulkanisierten Kautschukmischungsschichten, die auf der einen Seite entsprechend farbig bedruckt sind oder per Transferfolien oder dgl. mit Zeichen versehen worden sind. Auf der anderen Seite, ihrer Rückseite, die mit der Reifenseitenwand verbunden wird, sind die Labels mit einer Schutzfolie versehen. In-Cure-Labels werden von Hand einem Puffer entnommen, die Schutzfolie wird von der Rückseite der In-Cure-Labels entfernt und anschließend wird das In-Cure-Label in die untere Seitenwandschale der Vulkanisationsform mit der Rückseite nach oben eingelegt, wobei eine exakte Positionierung durch in der Seitenwandschale befestigte, federbelastete Stifte erfolgt, die in entsprechende Öffnungen des In-Cure-Labels eingreifen. Die Positionierung der In-Cure-Label in der meist noch heißen Vulkanisationsform erfordert von der Bedienperson ein präzises Handling, insbesondere um eine etwaige Kontamination der In-Cure-Label und eine Verletzung der Bedienperson durch die heiße Vulkanisationsform zu verhindern. Um das Kontaminationsrisiko der In-Cure-Label zu minimieren und gleichzeitig die Sicherheit für die Bedienperson zu erhöhen, muss diese Handschuhe tragen, wodurch zusätzlich das Handling der In-Cure-Label erschwert wird.

Der Erfindung liegt die Aufgabe zugrunde, eine Hilfsvorrichtung zur Verfügung zu stellen mittels welcher für die Bedienperson eine sichere, saubere, schnelle und präzise Positionierung der In-Cure-Label in der Vulkanisationsform möglich ist.

Gelöst wird die gestellte Aufgabe erfindungsgemäß dadurch, dass die Hilfsvorrichtung ein Applikator mit einem Griffelement und einer zu diesem unter einem stumpfen Winkel verlaufenden Auflage für das In-Cure-Label ist, wobei an der unter dem stumpfen Winkel zur Auflage verlaufenden Seite des Griffelementes Halteelemente befestigt sind, derart, dass das In-Cure-Label zwischen den Halteelementen und der Auflage auflösbare Weise einklemmbar ist

Die Erfindung stellt daher einen Applikator zur Verfügung, mit welchem In-Cure-Label von einer Bedienperson auf eine saubere, schnelle und präzise Weise auf den Stiften an der Formfläche Vulkanisationsform positioniert werden können. Dabei ist von besonderem Vorteil, dass die In-Cure-Label vorab schon flächig und in einer stabilen Lage im Applikator positioniert wird. Die Abwinkelung des Griffes von der Auflage gestattet es, die In-Cure-Label auf die Reifenheizform aufzusetzen ohne dass die Bedienperson Gefahr läuft, mit der heißen Formfläche in Kontakt zu kommen. Eine Berührung der In-Cure-Label beschränkt sich auf das Einlegen derselben in den Applikator, nach dem Positionieren des In-Cure-Labels auf der Formfläche halten die Stifte das In-Cure-Label und es ist lediglich ein Wegbewegen und damit Abziehen des Applikators vom In-Cure-Label erforderlich.

Bei einer bevorzugten Ausführung ist die Auflage gemäß einem streifenförmigen Randabschnitt des In-Cure-Label gestaltet. Diese Maßnahme gewährleistet ein optimales Positionieren des In-Cure-Labels im Applikator, da die Auflagefläche an die Gestalt des In-Cure-Labels angepasst ist.

Bevorzugt beträgt der stumpfe Winkel zwischen dem Griffelement und der Auflage 160° bis 175°, insbesondere in der Größenordnung von 170°. Durch diese Maßnahme wird eine komfortable Handhabung des Applikators zum Positionieren dersIn-Cure-Labels an der Formfläche der Vulkanisationsform und beim Ablösen des Applikators vom In-Cure-Label nach dem Positionieren des In-Cure-Labels gewährleistet.

Gemäß einer weiteren vorteilhaften Ausgestaltung weist zumindest die Auflage, vorzugsweise weist auch das Griffelement, eine Längserstreckung auf, die an die Längserstreckung des In-Cure-Labels angepasst ist. Der Applikator nimmt daher das In-Cure-Label derart auf, dass es präzise auf den Stiften an der Formfläche der Vulkanisationsform positioniert werden kann. Ein entsprechend großes bzw. langgestrecktes Griffelement gestattet eine besonders komfortable Handhabung des Applikators.

Bevorzugt ist weiters eine Ausführung, bei der an der unter dem stumpfen Winkel zur Auflage verlaufenden Seite des Griffelementes zwei Gleitelemente angeordnet sind, welche das Griffelement oberhalb der Auflage und in Überlappung mit den seitlichen Rändern der Auflage überragen und an ihren Enden mit je einem Rollenelement versehen sind, welches mit zumindest einer frei drehbaren Gleitrolle versehen ist, deren Drehachse in der Längserstreckung der Auflage orientiert ist. Die Gleitrollen unterstützen ein komfortables Abziehen des Applikators von dem an der Formfläche der Vulkanisationsform positionierten In-Cure-Label.

Bei einer bevorzugten Ausführungsvariante ist dabei vorgesehen, dass die Gleitrolle zum Abziehen des Applikators nach dem Positionieren des In-Cure-Labels in der Vulkanisationsform durch Kippen des Applikators zugleich mit dem In-Cure-Label und der Formfläche in Kontakt bringbar ist. Bei einer alternativen Ausführung weist jedes Rollenelement zwei Gleitrollen auf, wobei zum Abziehen des Applikators nach dem Positionieren das In-Cure-Label in der Vulkanisationsform durch Kippen des Applikators die eine Gleitrolle mit dem In-Cure-Label und die andere Gleitrolle mit der Formfläche in Kontakt bringbar ist.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf eine Ausführung eines Applikators,
Fig. 2 den Applikator in leicht vergrößerter Seitenansicht,
Fig. 3 eine Draufsicht auf ein Beispiel eines In-Cure-Labels und
Fig. 4 eine Draufsicht auf den Applikator mit positioniertem In-Cure-Label.

In-Cure-Label weisen üblicherweise die Gestalt von Umfangsabschnitten von Kreisringen sowie eine Breite in der Größenordnung von einigen Zentimetern auf und sind dabei entsprechend an die Kreisringform der Reifenseitenwand, auf welche sie aufgebracht werden, angepasst. In-Cure-Label gestatten es, auf dauerhaltbare Weise eine gegenüber dem schwarzen Gummimaterial der Seitenwand andersfarbige Zeichen, insbesondere Schriftzüge, auf Reifenseitenwänden anzubringen.

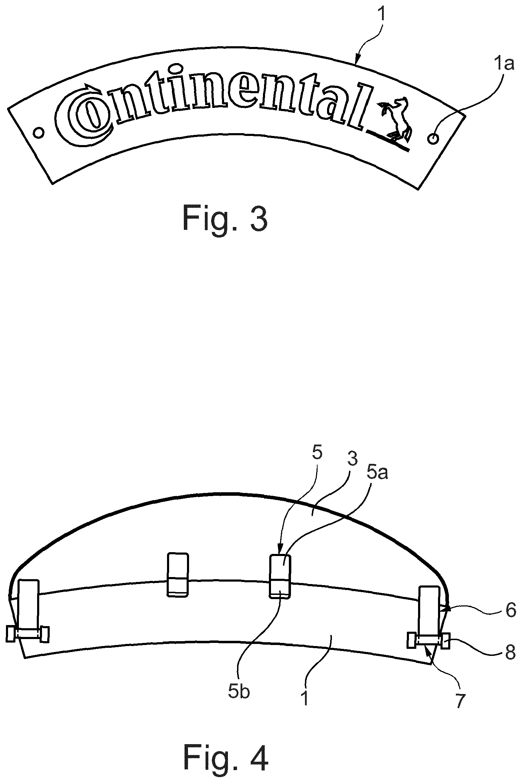

Fig. 3 zeigt ein Bespiel eines In-Cure-Labels 1, welches mit dem Schriftzug "Continental" bedruckt ist. Fig. 4 zeigt das an einem Applikator 2 gehaltene In-Cure-Label 1, wobei die nicht bedruckte Seite des In-Cure-Labels 1 zu sehen ist. Das In-Cure-Label 1 weist an seinen Endbereichen je ein Loch 1a auf, welches ein Positionieren des In-Cure-Labels 1 auf federbelasteten Stiften an der Vulkanisationsform gestatten.

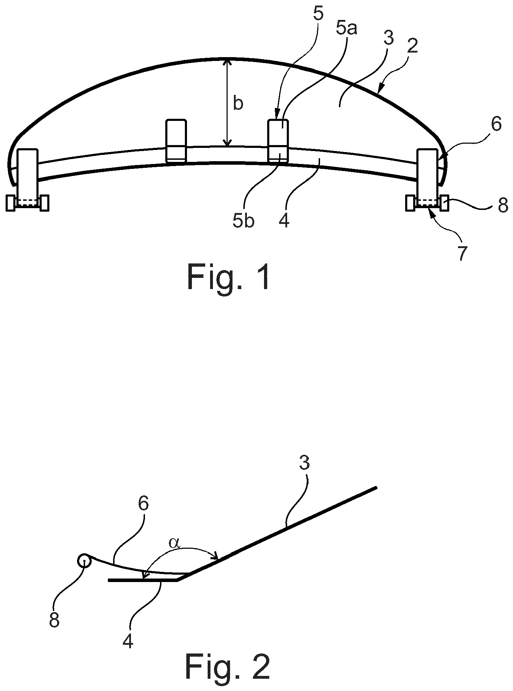

Der Applikator 2 (Fig. 1 und Fig. 2) ist eine Hilfsvorrichtung zum sauberen, schnellen und präzisen Positionieren der In-Cure-Labels 2 in der unteren Seitenwandschale einer meist noch heißen Vulkanisationsform und reduziert das Kontaminationsrisiko der In-Cure-Label 1 durch die Bedienperson. Der Applikator 2 weist ein im Beispiel langgestrecktes und plattenförmiges Griffelement 3 und eine Auflage 4 auf, wobei diese beiden Teile zueinander gewinkelt verlaufen. Das Griffelement 3 ragt unter einem stumpfen Winkel α (Fig. 2) von insbesondere 160° bis 175°, insbesondere in der Größenordnung von 170° von der Auflage 4 ab und weist bei der gezeigten Ausführung eine bogenförmig verlaufende Außenkante auf. Die Oberseite des Applikators 2 ist jene Seite, an welcher der Winkel α vorliegt. Bei der bevorzugten Ausführung ist das Griffelement 3 mit der Auflage 4 einteilig hergestellt und besteht insbesondere aus Metall oder einem hitzebeständigen Kunststoff. Die Auflage 4 ist ein streifenförmiges, als Umfangsabschnitt eines Kreisringes gestaltetes Element mit einer Breite von beispielsweise 12,0 mm bis 17,0 mm, insbesondere in der Größenordnung von 15,0 mm. Die Auflage 4 ist an die gebogene Form des In-Cure-Labels 1 derart angepasst, dass die zwischen dem Griffelement 3 und der Auflage 4 befindliche Kante entlang eines Kreisbogens mit einem Radius verläuft, welcher dem Radius des Kreisbogens an der in Fig. 3 und Fig. 4 oberen Kante des In-Cure-Labels 1 entspricht. Die Breite bzw. Gestalt der Auflage 4 ist jedenfalls derart, dass die Löcher 1a des In-Cure-Labels 1 bei am Applikator 2 positioniertem In-Cure-Label 1 frei liegen. Die Bogenlänge an der Kante der Auflage 4 zum Griffelement 3 entspricht zumindest weitgehend der Bogenlänge der erwähnten oberen Kante des In-Cure-Labels 1.

Das Griffelement 3 weist eine größte Breite b von einigen Zentimetern, insbesondere 5,0 cm bis 10,0 cm, auf, sodass die Bedienperson den Applikator 2 von Hand aus gut ergreifen kann. Bei der gezeigten Ausführung weist ferner das Griffelement 3 eine Längserstreckung auf, die an die Längserstreckung der Auflage 4 angepasst ist. An der Oberseite des Griffelementes 3 sind zwei Halteelemente 5 mit je einem Befestigungsabschnitt 5a befestigt, beispielsweise angenietet. Vom Befestigungsabschnitt 5a ragt, beispielsweise über Knicke im Material der Halteelemente 5, ein Halteabschnitt 5b ab, welcher parallel zur Auflage 4 verläuft und zu diesem einen Abstand aufweist, welcher an die Dicke des In-Cure-Labels 1 derart angepasst ist, dass das In-Cure-Label 1 ohne Beschädigung zwischen der Auflage 4 und den Halteelementen 5 zwar eingeklemmt werden kann jedoch nach dem Positionieren des In-Cure-Labels 1 in der Vulkanisationsform der Applikator 2 vom In-Cure-Label 1 problemlos gelöst werden kann.

An den seitlichen Randbereichen des Griffelementes 3 ist an der Oberseite des Griffelementes 3 jeweils ein Gleitelement 6 befestigt, beispielsweise ebenfalls angenietet. Die Gleitelemente 6 überragen das Griffelement 3 oberhalb der Auflage 4 in Überlappung mit den seitlichen Rändern der Auflage 4 und sind an ihren Enden mit je einem Rollenelement 7 versehen, welches jeweils zwei frei drehbare, kleine Gleitrollen 7 aufweist. Die Drehachsen der Gleitrollen 7 verlaufen quer zur Abziehrichtung (Pfeil P in Fig.1) des Applikators 2.

Zum Positionieren eines In-Cure-Labels 1 in der Vulkanisationsform wird die auf der bedruckten Seite des In-Cure-Labels 1 befindliche Schutzfolie abgezogen und von der Bedienperson, die Handschuhe trägt, am Applikator 2 positioniert (Fig. 3). Die Bedienperson erfasst den Applikator 2 am Griffelement 3 und setzt das In-Cure-Label 1 auf die federbelasteten Stifte in der Formfläche der Vulkanisationsform, indem die Stifte in die im In-Cure-Label 1 ausgebildeten seitlichen Löcher 1a eingreifen. Zum Lösen des Applikators 2 vom positionierten In-Cure-Label 1 wird der Applikator 2 leicht gekippt, sodass durch Abrollen der Gleitrollen 7 am In-Cure-Label 1 und der Formfläche ein Abziehen des Applikators 2 vom In-Cure-Label 1 erfolgt.

### Bezugsziffernliste

- 1: In-Cure-Label
- 1a: seitliches Loch
- 2: Applikator
- 3: Griffelement
- 4: Auflage
- 5: Halteelement
- 5a: Befestigungsabschnitt
- 5b: Halteabschnitt
- 6: Gleitelement
- 6a: Befestigungsabschnitt
- 6b: Gleitabschnitt
- 7: Rollenelement
- 8: Gleitrolle
- b: Breite
- α: Winkel

## Patentansprüche

1. Hilfsvorrichtung zum Positionieren eines In-Cure-Label (1) an einer Formfläche einer Vulkanisationsform für einen Fahrzeugluftreifen,
**dadurch gekennzeichnet,**
**dass** sie ein Applikator (2) mit einem Griffelement (3) und einer zu diesem unter einem stumpfen Winkel (a) verlaufenden Auflage (4) für das In-Cure-Label (1) ist, wobei an der unter dem stumpfen Winkel (a) zur Auflage verlaufenden Seite des Griffelementes (3) Halteelemente (5) befestigt sind, derart, dass das In-Cure-Label (1) zwischen den Halteelementen (5) und der Auflage (4) auflösbare Weise einklemmbar ist.

2. Hilfsvorrichtung nach Anspruch 1, **dadurch gekennzeichnet, dass** die Auflage (4) gemäß einem streifenförmigen Randabschnitt des In-Cure-Labels (1) gestaltet ist.

3. Hilfsvorrichtung nach Anspruch 1 oder 2, **dadurch gekennzeichnet, dass** der stumpfe Winkel (a) zwischen dem Griffelement (3) und der Auflage (4) 160° bis 175°, insbesondere in der Größenordnung von 170°, beträgt.

4. Hilfsvorrichtung nach einem der Ansprüche 1 bis 3, **dadurch gekennzeichnet, dass** zumindest die Auflage (4), vorzugsweise auch das Griffelement (3), eine Längserstreckung aufweist bzw. aufweisen, die an die Längserstreckung des In-Cure-Labels (1) angepasst ist.

5. Hilfsvorrichtung nach einem der Ansprüche 1 bis 4, **dadurch gekennzeichnet, dass** an der unter dem stumpfen Winkel (a) zur Auflage (4) verlaufenden Seite des Griffelementes (3) zwei Gleitelemente (6) angeordnet sind, welche das Griffelement (3) oberhalb der Auflage (4) und in Überlappung mit den seitlichen Rändern der Auflage (4) überragen und an ihren Enden mit je einem Rollenelement (7) versehen sind, welches mit zumindest einer frei drehbaren Gleitrolle (8) versehen ist, deren Drehachse in der Längserstreckung der Auflage (4) orientiert ist.

6. Hilfsvorrichtung nach Anspruch 5, **dadurch gekennzeichnet, dass** die Gleitrolle (7) zum Abziehen des Applikators (2) nach dem Positionieren des In-Cure-Labels (1) in der Vulkanisationsform durch Kippen des Applikators (2) zugleich mit dem In-Cure-Label (1) und der Formfläche in Kontakt bringbar ist.

7. Hilfsvorrichtung nach Anspruch 5, **dadurch gekennzeichnet, dass** jedes Rollenelement (7) zwei Gleitrollen (8) aufweist, wobei zum Abziehen des Applikators nach dem Positionieren des In-Cure-Labels (1) in der Vulkanisationsform durch Kippen des Applikators die eine Gleitrolle (8) mit dem In-Cure-Label (1) und die andere Gleitrolle (8) mit der Formfläche in Kontakt bringbar ist.

## Claims

1. Auxiliary apparatus for positioning an in-cure label (1) on a mould face of a vulcanization mould for a pneumatic vehicle tyre,
**characterized**
**in that** it is an applicator (2) with a grip element (3) and a support (4), running at an obtuse angle (a) with respect to the former, for the in-cure label (1), holding elements (5) being fastened to a side, running at the obtuse angle (a) with respect to the support, of the grip element (3) in such a way that the in-cure label (1) can be clamped in between the holding elements (5) and the support (4) in a releasable way.

2. Auxiliary apparatus according to Claim 1, **characterized in that** the support (4) is designed in accordance with a strip-shaped edge section of the in-cure label (1).

3. Auxiliary apparatus according to Claim 1 or 2, **characterized in that** the obtuse angle (a) between the grip element (3) and the support (4) is from 160° to 175°, in particular in the order of magnitude of 170°.

4. Auxiliary apparatus according to one of Claims 1 to 3, **characterized in that** at least the support (4), and preferably also the grip element (3), has/have a longitudinal extent which is adapted to the longitudinal extent of the in-cure label (1).

5. Auxiliary apparatus according to one of Claims 1 to 4, **characterized in that** two sliding elements (6) are arranged on that side of the grip element (3) which runs at the obtuse angle (a) with respect to the support (4), which sliding elements (6) protrude beyond the grip element (3) above the support (4) and in overlap with the lateral edges of the support (4), and are provided at their ends with in each case one roller element (7) which is provided with at least one freely rotatable sliding roller (8), the rotational axis of which is oriented in the longitudinal extent of the support (4).

6. Auxiliary apparatus according to Claim 5, **characterized in that** the sliding roller (7) can be brought into contact at the same time with the in-cure label (1) and the mould face in order to remove the applicator (2) after the positioning of the in-cure label (1) in the vulcanization mould by way of tilting of the applicator (2).

7. Auxiliary apparatus according to Claim 5, **characterized in that** each roller element (7) has two sliding rollers (8), it being possible for the one sliding roller (8) to be brought into contact with the in-cure label (1) and for the other sliding roller (8) to be brought into contact with the mould face in order to remove the applicator after the positioning of the in-cure label (1) in the vulcanization mould by way of tilting of the applicator.

## Revendications

1. Dispositif auxiliaire de positionnement d'un libellé intégré durci (1) sur une surface d'un moule de vulcanisation destiné à pneumatique de véhicule,
**caractérisé en ce que**
ledit dispositif est un applicateur (2) muni d'un élément de préhension (3) et d'un support (4) formant un angle obtus (a) avec celui-ci et destiné au libellé intégré durci (1), des éléments de retenue (5) étant fixés sur le côté de l'élément de préhension (3) qui forme l'angle obtus (a) avec le support de manière à pouvoir insérer le libellé intégré durci (1) de manière amovible entre les éléments de retenue (5) et le support (4).

2. Dispositif auxiliaire selon la revendication 1, **caractérisé en ce que** le support (4) est conçu conformément à une portion de bord en forme de bande du libellé intégré durci (1).

3. Dispositif auxiliaire selon la revendication 1 ou 2, **caractérisé en ce que** l'angle obtus (a) entre l'élément de préhension (3) et le support (4) est de 160° à 175°, notamment de l'ordre de 170°.

4. Dispositif auxiliaire selon l'une des revendications 1 à 3, **caractérisé en ce qu'**au moins le support (4), de préférence également l'élément de préhension (3), présente une extension longitudinale qui est adaptée à l'extension longitudinale du libellé intégré durci (1).

5. Dispositif auxiliaire selon l'une des revendications 1 à 4, **caractérisé en ce que** deux éléments coulissants (6) sont disposés du côté de l'élément de préhension (3) qui forme l'angle obtus (a) avec le support (4), lesquels éléments coulissants font saillir l'élément de préhension (3) au-dessus du support (4) et à chevauchement avec les bords latéraux du support (4) et sont pourvus chacun à leurs extrémités d'un élément à galet (7) qui est pourvu d'au moins un galet (8) qui peut tourner librement et dont l'axe de rotation est orienté suivant l'extension longitudinale du support (4).

6. Dispositif auxiliaire selon la revendication 5, **caractérisé en ce que** le galet coulissant (7) peut être mis en contact en même temps avec le libellé intégré durci (1) et la surface du moule par inclinaison de l'applicateur (2) afin de retirer l'applicateur (2) après le positionnement du libellé intégré durci (1) dans le moule de vulcanisation.

7. Dispositif auxiliaire selon la revendication 5, **caractérisé en ce que** chaque élément à galet (7) comporte deux galets coulissants (8), l'un des galets coulissants (8) pouvant être mis en contact avec le libellé intégré durci (1), et l'autre des galets coulissants (8) pouvant être mis en contact avec la surface du moule, afin de retirer l'applicateur après le positionnement du libellé intégré durci (1) dans le moule de vulcanisation par inclinaison de l'applicateur.
